Europäisches Patentamt

European Patent Office

Office européen des brevets

(19)

(11) **EP 0 614 200 B1**

(12) **FASCICULE DE BREVET EUROPEEN**

(45) Date de publication et mention
de la délivrance du brevet:
**29.04.1998  Bulletin 1998/18**

(51) Int Cl.⁶: **H01F 27/38**, H02M 3/335

(21) Numéro de dépôt: **94400467.0**

(22) Date de dépôt: **04.03.1994**

(54) **Dispositif de limitation de la tension aux bornes d'un enroulement de transformateur**

Vorrichtung zur Begrenzung der Klemmenspannung einer Transformatorwicklung

Device for limiting the terminal voltage of a transformer winding

(84) Etats contractants désignés:
**DE FR GB IT**

(30) Priorité:  **05.03.1993  FR 9302587**

(43) Date de publication de la demande:
**07.09.1994  Bulletin 1994/36**

(73) Titulaire: **THOMSON-CSF**
**75008 Paris (FR)**

(72) Inventeur: **Debourg, Frédéric**
**F-92402 Courbevoie Cedex (FR)**

(74) Mandataire: **Chaverneff, Vladimir et al**
**THOMSON-CSF-S.C.P.I.,**
**13, Avenue du Président**
**Salvador Allende**
**94117 Arcueil Cédex (FR)**

(56) Documents cités:
**DE-A- 4 004 412**        **US-A- 4 178 540**

• **PATENT ABSTRACTS OF JAPAN vol. 5, no. 121
(E-68) 5 Août 1981 & JP-A-56 060 004 (SONY)**

## Description

La présente invention se rapporte à un dispositif de limitation de la tension aux bornes d'un enroulement de transformateur.

La tension aux bornes d'un enroulement secondaire de transformateur peut, par exemple lorsque l'on applique un échelon de tension au primaire de ce transformateur, atteindre une valeur nettement supérieure à la valeur nominale que l'on y obtient en service normal. Cette tension élevée peut endommager les circuits qui sont branchés aux bornes de cet enroulement secondaire, et même le transformateur lui-même.

Selon l'art antérieur, la limitation de la tension aux bornes d'un enroulement de transformateur se fait soit par amortissement, soit par écrêtage. L'amortissement consiste à introduire des pertes par effet Joule aux bornes de l'enroulement à l'aide d'un circuit du type à résistance et condensateur. L'écrêtage consiste à limiter la tension aux bornes de l'enroulement à l'aide d'un circuit comportant par exemple au moins une diode et une source de tension, auxquelles on peut associer d'autres éléments tels que des condensateurs, des résistances et des inductances, ou bien des montages actifs.

Tous ces dispositifs connus, outre le fait qu'ils nécessitent généralement un nombre important de composants volumineux externes au transformateur, présentent l'un au moins des deux inconvénients suivants :

- dissipation d'énergie non négligeable, ce qui est le cas de la majorité des circuits amortisseurs et écrêteurs ;
- écrêtage à une valeur de tension qui ne varie pas dans le même rapport que la tension d'entrée du transformateur, ce qui fait que la tension aux bornes de l'enroulement secondaire a une forme d'onde variable lorsque la valeur de la tension d'entrée varie.

Ces deux inconvénients sont particulièrement gênants pour les alimentations à découpage, le premier à cause des difficultés d'évacuation des calories produites dans les composants, et de la baisse du rendement, notamment à fréquence élevée, et le second à cause de la difficulté de réguler une alimentation recevant une forme d'onde variable.

On connaît d'après le document DE-A-4 004 412 un transformateur pour convertisseur continu-continu comportant un enroulement tertiaire relié en série et en mode additif à l'enroulement primaire, ce qui ne permet pas de diminuer la tension au secondaire.

La présente invention a pour objet un dispositif de limitation de tension aux bornes d'un enroulement secondaire de transformateur, dispositif qui ne soit pratiquement pas le siège de dissipation thermique, et qui ne produise pratiquement pas de variation de la forme d'onde de la tension secondaire lorsque la valeur de la tension primaire varie.

Le dispositif conforme à l'invention, utilisé avec un transformateur ayant au moins un enroulement primaire, au moins un enroulement secondaire et au moins un enroulement tertiaire, comportant avantageusement pratiquement le même nombre de spires que l'enroulement primaire, et relié par au moins une diode à la source de tension alimentant l'enroulement primaire du transformateur, et il est caractérisé en ce que chaque enroulement tertiaire est relié en opposition à l'enroulement primaire. De façon avantageuse on dispose en série avec l'enroulement primaire au moins une inductance augmentant artificiellement la valeur de l'inductance de fuite secondaire-primaire du transformateur.

La présente invention sera mieux comprise à la lecture de la description détaillée d'un mode de réalisation, puis à titre d'exemple non limitatif et illustré par le dessin annexé, sur lequel :

- la figure 1 est un schéma équivalent d'un transformateur simple comportant un enroulement primaire et un enroulement secondaire ;
- la figure 2 est un chronogramme de tensions réelle sans pertes, réelle avec pertes et théorique aux bornes d'un enroulement secondaire de transformateur dont l'enroulement primaire reçoit un échelon de tension ;
- les figures 3 et 4 sont des schémas simplifiés de dispositifs limiteurs de l'art antérieur ;
- la figure 5 est un schéma de principe d'un dispositif de limitation conforme à l'invention ;
- les figures 6 et 7 sont des schémas équivalents du dispositif de la figure 5 ;
- la figure 8 est un chronogramme de la tension au secondaire du transformateur de la figure 5 ; et
- la figure 9 est un schéma de réalisation pratique d'un dispositif de limitation de tension conforme à l'invention.

L'invention est décrite ci-dessous en référence à un transformateur "simple" comportant un enroulement primaire et un enroulement secondaire, mais il est bien entendu qu'elle peut s'appliquer à des transformateurs comportant plusieurs enroulements secondaires, et que l'on peut appliquer le dispositif de l'invention à une partie de ces enroulements secondaires (seulement ceux aux bornes desquels sont branchés des circuits craignant les surtensions) ou à tous les enroulements secondaires.

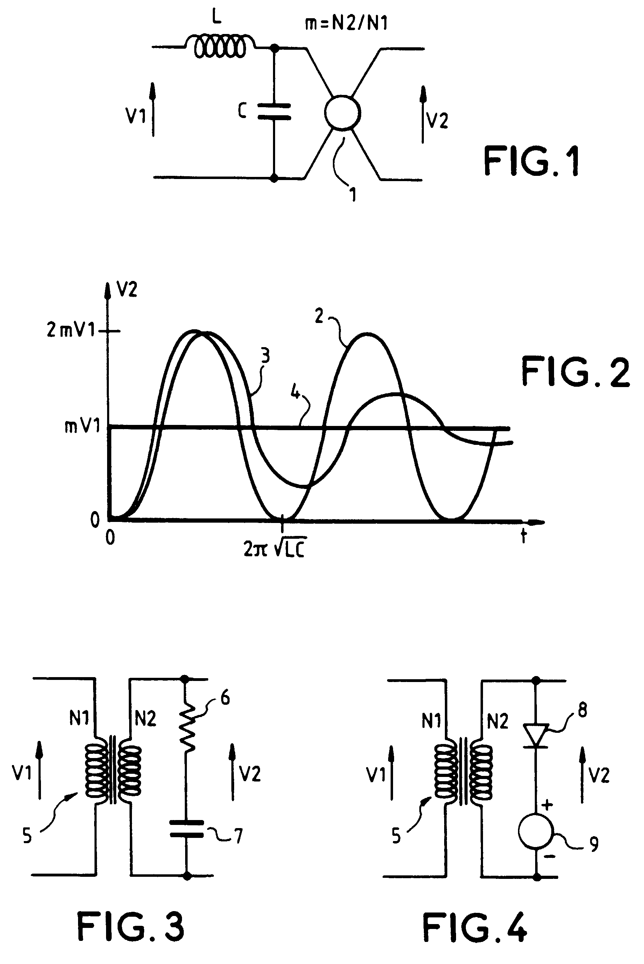

On a représenté en figure 1 le schéma équivalent simplifié d'un transformateur comportant un enroulement primaire à N1 spires et un enroulement secondaire à N2 spires. Aux bornes de ces enroulements sont respectivement présentes les tensions V1 et V2. Les deux éléments parasites de ce transformateur sont son inductance de fuite L et la capacité C de couplage entre des enroulements.

Le schéma équivalent de la figure 1 comporte un transformateur parfait 1 de rapport N2/N1 en parallèle sur le primaire duquel se trouve la capacité C, ce primaire étant en série avec l'inductance L. En fait, il faudrait ajouter à C la capacité de la charge branchée au secondaire et ramenée au primaire.

Lorsque l'on applique un échelon de tension d'amplitude V1 au primaire de ce transformateur, la tension V2 aux bornes du secondaire suit la loi oscillatoire réelle suivante, si l'on néglige les pertes :

$$V2 = m\,V1\left[1 - \cos\left(t/(LC)^{1/2}\right)\right]$$

l'allure de cette tension est représentée en 2 sur la figure 2.

En réalité, la forme d'onde obtenue est amortie par les pertes par effet Joule dans les enroulements du transformateur, et la tension V2 tend vers la valeur finale V2 = mV1 (forme représentée en 3 sur la figure 2).

On remarquera que dans le cas idéal où il n'y aurait pas les éléments parasites L et C, la tension V2 aurait la forme d'une droite horizontale d'ordonnée V2 = mV1.

En négligeant les pertes dues à ces éléments parasites, comme on le fera par la suite, on voit que la tension aux bornes du secondaire du transformateur peut atteindre 2m V1, soit deux fois la tension idéale. Dans de nombreuses applications (alimentations à découpage, transformateurs d'impulsions, ...), cette surtension peut être gênante et même dangereuse pour les circuits branchés en aval de l'enroulement secondaire. La tension V2 doit donc alors être limitée.

On a représenté en figures 3 et 4 les schémas de principe de dispositifs limiteurs de l'art antérieur. Selon la figure 3, on branche au secondaire du transformateur 5 un circuit série comportant une résistance 6 et un condensateur 7. Selon la figure 4, on branche un secondaire du transformateur 5 une diode (ou plusieurs) 8 en série avec une source de tension 9 qui polarise en inverse la diode 8. Les inconvénients de ces types connus de circuits limiteurs ont été décrits ci-dessus en préambule.

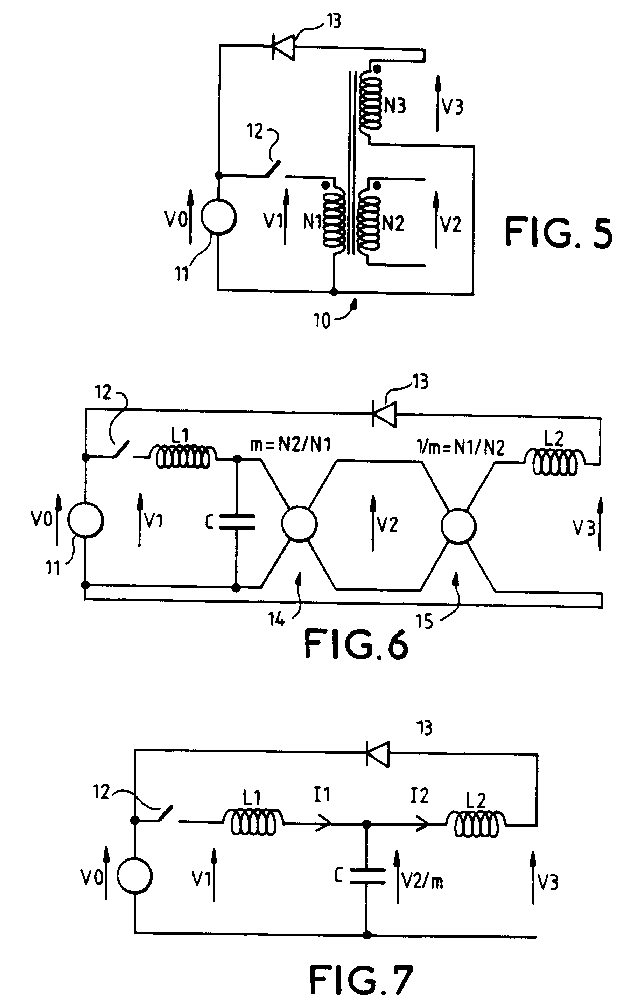

On a représenté en figure 5 le schéma de principe d'un dispositif limiteur conforme à l'invention. Le transformateur 10 comporte, outre l'enroulement primaire à N1 spires et l'enroulement secondaire à N2 spires, un enroulement tertiaire à N3 spires. L'enroulement tertiaire est couplé le plus fortement possible à l'enroulement secondaire (ils sont par exemple bobinés dans la même couche ou dans des couches adjacentes) De façon avantageuse, N3 = N1. L'enroulement primaire est alimenté par une source de tension 11 via un interrupteur 12. L'une des extrémités de l'enroulement tertiaire est reliée directement à une borne de la source 11, et son autre extrémité est reliée par une diode 13 (ou un ensemble de diodes si nécessaire, c'est-à-dire en cas de tensions en jeu élevées) à l'autre borne de la source 11.

La source 11 délivre à vide (interrupteur 12 ouvert) une tension V0. Les tensions aux bornes des enroulements primaire, secondaire et tertiaire sont respectivement référencées V1, V2 et V3. Soit L1 l'inductance de fuite du transformateur ramenée au primaire lorsque le secondaire est en court-circuit, L2 l'inductance de fuite ramenée au tertiaire lorsque le secondaire est en court-circuit, et C la capacité entre spires de tous les enroulements ramenée au primaire. On obtient alors le schéma équivalent représenté en figure 6.

Sur le schéma de la figure 6, un premier transformateur parfait 14, de rapport M = N2/N1 est relié à la source 11 via L1 et l'interrupteur 12. La capacité C est en parallèle sur son entrée. La sortie du transformateur 14 est directement reliée à l'entrée d'un deuxième transformateur parfait 15 de rapport 1/m = N1/N2. L'une des bornes de sortie du transformateur 15 est directement reliée à une borne de la source 11, et son autre borne de sortie est reliée via L2 et la diode 13 à l'autre borne de la source 11. Aux bornes de L1 et C, on a la tension V1. A la sortie de 14, on a la tension V2 et à la sortie de 15, en aval de L2, on a la tension V3.

On a représenté en figure 7 la version simplifiée du schéma de la figure 6. Par rapport au schéma de la figure 6, on a supprimé les transformateurs 14 et 15. On a noté V2/m la tension aux bornes de C, I1 et I2 les courants passant dans L1 et L2 respectivement.

Avant la fermeture de l'interrupteur 12, on a :

$$V1 = V2 = V3 = 0$$

$$I1 = I2 = 0$$

Lorsque l'on ferme l'interrupteur 12, V1 = V0, et V2/m ainsi que I1 évoluent selon les lois suivantes, l'origine des temps étant l'instant de fermeture de l'interrupteur 12 :

$$V2 \, / \, m = V0 \left\{ 1 - \cos \left[ t \, / \, (L1C)^{1/2} \right] \right\},$$

et

$$I1 = V0 \left\{ (C \, / \, L1)^{1/2} \, \sin \left[ t \, / \, (L1C)^{1/2} \right] \right\}$$

Tant que V2/m < V0, la diode 13 est bloquée et V3 = V2/m, et 12 = 0.

A l'instant t = (π/2) (L1C)$^{1/2}$, on a V2/m=V0, et la diode 13 commence à conduire. Les équations suivantes sont alors valables dans le dispositif de la figure 7 :

$$V0 - V2 \, / \, m = L1 \, dI1/dt = -L2 \, dI2 \, / \, dt$$

et

$$(C/m)dV2/dt = I1-I2$$

avec les conditions initiales suivantes :

$$V2/m=V0=V1=V3$$

$$I1 = V0(C/L1)^{1/2}$$

$$I2 = 0$$

ce qui donne:

$$V2 = mV0 \left[ 1 + \left\{ L2 \, / \, (L1 + L2) \right\}^{1/2} \right] \sin (wt + F) \qquad (1)$$

avec:

$$w = 1/[L1L2C/(L1+L2)]^{1/2}$$

$$F = -(\pi/2)[(L1+L2)/L2]^{1/2}$$

Cette équation (1) reste valable tant que la diode 13 reste passante, ce qui est le cas si le dispositif n'est pas amorti.

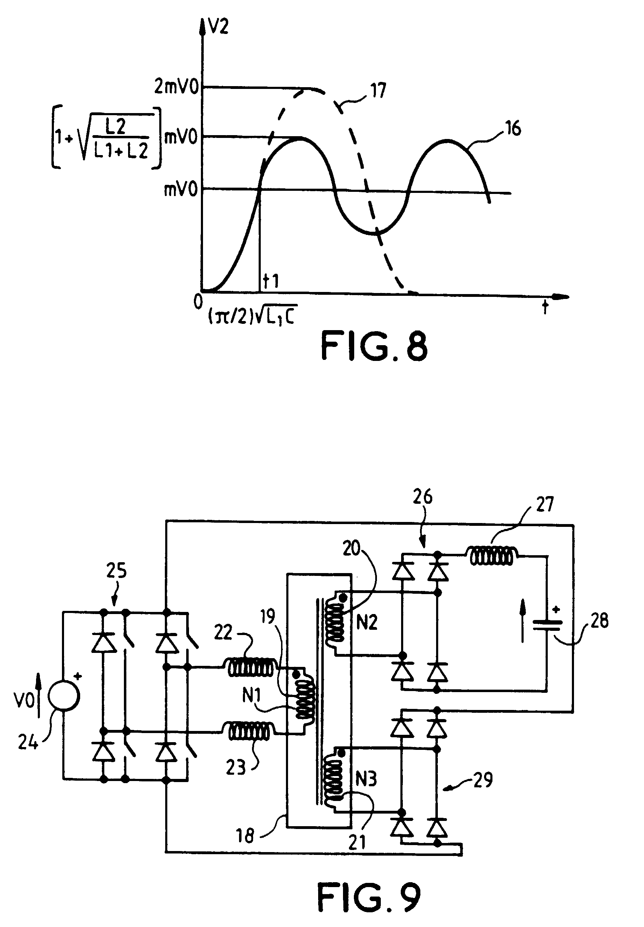

On a représenté en figure 8 en trait continu l'allure de la courbe 16 représentative de l'équation (1), et en trait interrompu l'allure de la courbe 17 de la loi réelle sans pertes pour des dispositifs sans limitation. Sur cette figure 8, la courbe 17 passe par un maximum égal à 2mV0. La courbe 16 passe une première fois par la valeur mV0 au temps T1 = (π/2)(L1C)$^{1/2}$ et arrive à un maximum V2 max tel que :

$$V2\mathbf{max} = mV0 \left[ 1 + \left\{ L2 \, / \, (L1 + L2) \right\}^{1/2} \right]$$

ce qui est nettement inférieur à 2mV0.

Ainsi, le dispositif de limitation de tension au secondaire, conforme à l'invention, ne donne pratiquement pas lieu à dissipation d'énergie, et les variations de la forme d'onde de la tension limitée sont pratiquement indépendantes de la variation de la tension d'entrée V0. En effet, les échanges d'énergie primaire/secondaire sont effectués par des composants réactifs ne donnant pratiquement pas lieu à des pertes par effet Joule. L'équation (1) ci-dessus montre que la tension V2 varie proportionnellement à V0, ce qui signifie que la forme d'onde au secondaire est constante, quelle que soit la valeur de V0. De plus, l'encombrement de ce dispositif est à peine plus important que celui du transformateur, puisqu'il ne nécessite, en-dehors du transformateur, qu'une ou plusieurs diodes. L'encombrement du transformateur lui-même est à peine augmenté du fait que l'enroulement tertiaire est généralement traversé par un courant efficace beaucoup plus faible que celui circulant dans les autres enroulements du transformateur. Cet enroulement tertiaire peut donc être réalisé avec un conducteur de faible section, et ainsi n'augmente pratiquement pas l'encombrement du transformateur.

Les performances du dispositif conforme à l'invention sont liées au rapport des inductances de fuite L2/L1 et elles sont d'autant meilleures que le rapport L2/L1 est faible, comme on le voit facilement d'après l'équation (1) ci-dessus. Les valeurs limites théoriques sont obtenues pour L2/L1 nul (performances maximales) et pour L2/L1 infini (performances minimales), ce qui donne respectivement V2 max = mV0 et V2max = 2mV0.

En pratique, il est difficile d'obtenir un rapport L2/L1 très faible, car les conditions d'isolement entre couches d'un transformateur imposent un espace minimum entre les enroulements secondaire et tertiaire. Il en résulte une inductance de fuite L2 non négligeable.

Cependant, selon une variante avantageuse de l'invention, on diminue artificiellement le rapport L2/L1 en augmentant L1 à l'aide d'au moins une inductance extérieure au transformateur, branchée en série avec son enroulement primaire, comme décrit ci-dessous en référence à la figure 9. De préférence, on recherche alors un compromis entre l'amélioration des performances du dispositif, l'encombrement de la (ou des) inductance(s) supplémentaire(s), et l'action des inductances supplémentaires sur les signaux envoyés au transformateur (si ces signaux sont des impulsions à fronts raides, une trop forte inductance supplémentaire risque de les déformer fortement).

On a représenté en figure 9 un exemple de réalisation d'une alimentation à découpage comportant un dispositif limiteur conforme à l'invention. Dans le cas présent, l'alimentation à découpage est une alimentation de forte puissance (environ 10 kW). Le transformateur 18 utilisé ici comporte un enroulement primaire 19, un enroulement secondaire 20 et un enroulement tertiaire 21. Les nombres de spires de ces enroulements sont respectivement de 18, 48 et 18 spires. Les inductances de fuite L1 (secondaire-primaire) et L2 (secondaire-tertiaire) valent chacune environ 5 µH. Pour augmenter artificiellement la valeur de L1, on relie en série avec l'enroulement 19 deux inductances 22, 23 valant chacune environ 5 µH, portant ainsi L1 à une valeur d'environ 15 µH.

L'enroulement 19 est alimenté par une source de tension continue 24 pouvant varier entre 400 et 600 V. La source 24 est suivie d'un découpeur 25 à montage classique en "H". L'enroulement secondaire 20 est relié à un pont redresseur 26 pouvant supporter une tension maximale de 3000 V. L'enroulement 20 alimente via une inductance 27 une charge 28 consommant une puissance d'environ 10 kW sous une tension nominale d'environ 750 V. L'enroulement tertiaire 21 est relié par un pont redresseur de Wheatstone 29 à la source 24.

Aux bornes de l'enroulement secondaire 20, le facteur de surtension est de $1+[L2/(L1+L2)]^{1/2}$, soit 1,5, ce qui permet de limiter la tension appliquée à l'entrée du redresseur à 600 Vx (48/18) x 1,5 = 2400 V au lieu de 600 x 48/18 = 3200 V sans le dispositif de l'invention.

Dans le cas où le transformateur comporte plusieurs enroulements secondaires, on prévoit avantageusement un enroulement tertiaire correspondant pour chacun de ces enroulements secondaires.

Dans tous les cas, on peut redresser soit l'une des alternances, soit les deux alternances de la tension de l'enroulement tertiaire. Dans le cas de deux alternances, soit on utilise un pont de diodes, soit le tertiaire comporte un point milieu et on utilise deux diodes.

**Revendications**

1. Dispositif de limitation de tension aux bornes d'un enroulement secondaire de transformateur comportant au moins un enroulement primaire, au moins un enroulement secondaire, et au moins un enroulement tertiaire N3 (21) et relié par au moins une diode (13, 29) à la source de tension V0 alimentant l'enroulement primaire N1 (19) du transformateur, caractérisé en ce que chaque enroulement tertiaire est relié en opposition à l'enroulement primaire.

2. Dispositif selon la revendication 1, caractérisé en ce que l'enroulement tertiaire est fortement couplé à l'enroulement secondaire correspondant.

3. Dispositif selon la revendication 1 ou 2, caractérisé en ce que chaque enroulement tertiaire comporte pratiquement le même nombre de spires que l'enroulement primaire.

4. Dispositif selon l'une des revendications précédentes, caractérisé par le fait qu'on dispose en série avec l'enroulement primaire au moins une inductance (22, 23) augmentant artificiellement la valeur de l'inductance de fuite secondaire/primaire du transformateur.

**Patentansprüche**

1. Anordnung zur Begrenzung der Spannung an den Klemmen einer Sekundärwicklung eines Transformators, der wenigstens eine Primärwicklung, wenigstens eine Sekundärwicklung und wenigstens eine Tertiärwicklung N3 (21) enthält, die über wenigstens eine Diode (13, 29) mit der die Primärwicklung N1 (19) des Tranformators speisenden Spannungsquelle V0 verbunden ist, dadurch gekennzeichnet, daß jede Tertiärwicklung gegensinnig an die Primärwicklung angeschlossen ist.

2. Anordnung nach Anspruch 1, dadurch gekennzeichnet, daß die Tertiärwicklung mit der entsprechenden Sekundärwicklung fest gekoppelt ist.

3. Anordnung nach Anspruch 1 oder 2, dadurch gekennzeichnet, daß jede Tertiärwicklung praktisch die gleiche Windungszahl wie die Primärwicklung hat.

4. Anordnung nach einem der vorhergehenden Ansprüche, dadurch gekennzeichnet, daß in Serie mit der Primärwicklung wenigstens eine Induktivität (22, 23) angeordnet ist, die den Wert der Sekundär/Primär-Streuinduktivität des Transformators künstlich vergrößert.

**Claims**

1. Device for limiting the voltage across the terminals of a secondary winding of a transformer which includes at least one primary winding, at least one secondary winding, and at least one tertiary winding N3 (21) which is connected by at least one diode (13, 29) to the voltage source VO supplying the primary winding N1 (19) of the transformer, characterized in that each tertiary winding is connected in opposition to the primary winding.

2. Device according to Claim 1, characterized in that the tertiary winding is strongly coupled to the corresponding secondary winding.

3. Device according to Claim 1 or 2, characterized in that each tertiary winding includes substantially the same number of turns as the primary winding.

4. Device according to one of the preceding claims, characterized in that at least one inductor (22, 23) artificially increasing the value of the secondary/ primary leakage inductions of the transformer is arranged in series with the primary winding.

FIG.1

FIG.2

FIG.3

FIG.4

FIG. 5

FIG.6

FIG.7

FIG.8

FIG.9